(19) Europäisches Patentamt
European Patent Office
Office européen des brevets

(11) **EP 3 132 004 B1**

(12) **EUROPÄISCHE PATENTSCHRIFT**

(45) Veröffentlichungstag und Bekanntmachung des Hinweises auf die Patenterteilung:
**28.02.2018 Patentblatt 2018/09**

(21) Anmeldenummer: **15720279.7**

(22) Anmeldetag: **14.04.2015**

(51) Int Cl.:
*C10G 1/02* (2006.01)     *C10G 1/10* (2006.01)
*C10B 7/10* (2006.01)     *C10B 53/00* (2006.01)

(86) Internationale Anmeldenummer:
**PCT/EP2015/058102**

(87) Internationale Veröffentlichungsnummer:
**WO 2015/158732 (22.10.2015 Gazette 2015/42)**

(54) **ANLAGE UND VERFAHREN ZUR THERMOKATALYTISCHEN BEHANDLUNG VON MATERIAL UND DAMIT HERGESTELLTES PYROLYSEÖL**

SYSTEM AND METHOD FOR THERMOCATALYTIC TREATMENT OF MATERIAL AND PYROLYSIS OIL PRODUCED THEREWITH

SYSTÈME ET PROCÉDÉ DE TRAITEMENT THERMO-CATALYTIQUE D'UNE MATIÈRE ET HUILE DE PYROLYSE FABRIQUÉ AU MOYEN DE CEUX-CI

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.04.2014 DE 102014105340**

(43) Veröffentlichungstag der Anmeldung:
**22.02.2017 Patentblatt 2017/08**

(73) Patentinhaber: **Fraunhofer Gesellschaft zur Förderung der angewandten Forschung E.V.
80686 München (DE)**

(72) Erfinder:
• **BINDER, Samir**
  **92278 Illschwang (DE)**
• **JAKUTTIS, Michael**
  **92337 Sulzbach-Rosenberg (DE)**
• **APFELBACHER, Andreas**
  **92224 Amberg (DE)**
• **HORNUNG, Andreas**
  **76185 Karlsruhe (DE)**

(56) Entgegenhaltungen:
CN-B- 102 585 860     US-A- 3 518 181
US-A1- 2011 258 914

**Beschreibung**

Die Erfindung betrifft eine Anlage und ein Verfahren zur thermokatalytischen Behandlung von Material sowie ein hiermit hergestelltes Pyrolyseöl.

Eine Pyrolyse dient der thermischen Umsetzung von kohlenstoffhaltigen Ausgangsmaterialien, beispielsweise Biomasse, in flüssiges Pyrolysekonzentrat (Pyrolyseöl), festen Pyrolysekoks und Pyrolysegas als Pyrolyseprodukte und erfolgt unter Sauerstoffausschluss oder zumindest im Wesentlichen ohne Anwesenheit von Sauerstoff. Die Pyrolyse ist üblicherweise ein endothermer Prozess, einzelne Teilschritte können jedoch auch exotherm verlaufen. Die Anteile der vorgenannten Pyrolyseprodukte sind einerseits durch die Wahl des Ausgangsmaterials (und insbesondere auch durch dessen Restfeuchte) und andererseits durch die vorherrschenden Verfahrensbedingungen, insbesondere die Pyrolysetermperatur, die Pyrolysezeit (Verweilzeit) sowie die Aufheiz- und Abkühlgeschwindigkeit beeinflussbar.

Häufig kann der Wärmebedarf einer Pyrolysereaktion durch Verbrennung von Pyrolysekoksen und dergleichen und/oder durch Verbrennung von Pyrolysegasen gedeckt werden.

Die Pyrolyse stellt also ein Verfahren dar, bei dem unter spezifischen Bedingungen ohne Gegenwart von Sauerstoff bei Temperaturen zwischen 270 und 1030°C bedarfsgerechte Produkte wie Gas, Öl oder Kohle für ein breites Anwendungsspektrum hergestellt werden können. Bei der Pyrolyse unterscheidet man zwischen der schnellen Pyrolyse (flash und fast pyrolysis) und der langsamen Pyrolyse (slow pyrolysis), die im Wesentlichen abhängig von der Aufheizrate des eingesetzten Ausgangsmaterials ist.

Die schnelle Pyrolyse zielt auf eine maximale Ausbeute an Flüssigprodukten ab. Hierbei werden bis zu 45 % Flüssigprodukte erhalten. Dafür muss die eingesetzte Biomasse im Sekundenbereich pyrolysiert werden; die Verweilzeit des Feststoffs in der heißen Zone liegt damit ebenfalls im Sekundenbereich. Die langsame Pyrolyse (auch Karbonisierung) wird seit Jahrzehnten zur Kohleherstellung genutzt. Hier beträgt die Verweilzeit des zu pyrolysierenden Materials in der Pyrolysezone Stunden bis Tage. Die Aufheizraten sind gering, um einen maximalen Anteil an Kohle zu generieren. Es wird hierbei nur Ausgangsmaterial, insbesondere Holz, mit einem Feuchtegehalt < 25 % eingesetzt; für andere Biomaterialien als Ausgangsstoffe ist das Verfahren nicht oder nur schlecht geeignet.

Eine Alternative zu den vorgenannten Pyrolyseverfahren ist eine Pyrolyse im mittleren Temperaturbereich bei mittleren Verweilzeiten. Die WO 2010/130988 A1 offenbart ein derartiges Verfahren, bei dem abhängig vom Partikeldurchmesser des eingesetzten Ausgangsmaterials die Verweilzeit mehrere Minuten betragen kann. Die Pyrolyse führt hier zu Produkten, bei denen der Teer-Gehalt reduziert ist.

Die WO 2009/138757 A2 offenbart einen Pyrolysereaktor, bei dem das Ausgangsmaterial mittels einer Förderschnecke durch den Reaktor transportiert und dabei gleichzeitig pyrolysiert wird. Am Ende der Pyrolysezone wird der gasförmige Pyrolysedampf abgezogen; die entstehende Kohle wird als Wärmeträger über eine äußere Schnecke zum Beginn der Pyrolysezone zurücktransportiert, um einen besseren Wärmeeintrag in das zu pyrolysierende Ausgangsmaterial realisieren zu können. Über die Drehgeschwindigkeit der äußeren Schnecke kann hierbei das Verhältnis Kohle zu frischem Ausgangsmaterial eingestellt werden; über die Drehgeschwindigkeit der inneren Schnecke kann die Verweilzeit in der Pyrolysezone eingestellt werden. US 3,518,181 offenbart ein Pyrolyseverfahren zur Gewinnung von Kohlenwasserstoffen aus bituminösen Sanden. Der vorliegenden Erfindung liegt die Aufgabe zugrunde, die Pyrolyseverfahren nach dem Stand der Technik zu verbessern und eine Anlage sowie ein Verfahren anzugeben, mit dem noch gezielter Einfluss auf das gebildete Produktspektrum genommen werden kann. Eine weitere Aufgabe ist es, mit dem Pyrolyseverfahren hochwertigere Pyrolyseprodukte zu erhalten, insbesondere gasförmige Pyrolyseprodukte mit erhöhtem Heizwert und/oder flüssige Pyrolyseöle, die sich zumindest im Gemisch mit anderen Ölen als Kraftstoff, beispielsweise Biodiesel, eignen und/oder feste Pyrolyseprodukte, die sich als Dünger oder Bodenverbesserer eignen.

Zumindest eine dieser Aufgaben wird durch die Anlage, das Verfahren und das Pyrolyseöl gemäß den unabhängigen Ansprüchen gelöst. Unteransprüche, die nachfolgende Beschreibung und die Beispiele und Figuren lehren vorteilhafte Weiterbildungen.

Eine Anlage zur thermokatalytischen Behandlung von Material, insbesondere von Abfallmaterialien, umfasst einen Beschickungsbereich, eine Vorkonditionierungszone, eine Pyrolysezone und eine Separationseinheit. Im Beschickungsbereich wird das zu behandelnde Ausgangsmaterial der eigentlichen Pyrolyseanlage zugeführt.

In der Vorkonditionierungszone sind erste Heizmittel angeordnet, mit denen das zugeführte Ausgangsmaterial auf eine Temperatur von zumindest 150° C erwärmt werden kann, wobei vorkonditioniertes Material gebildet wird.

In der Pyrolysezone sind zweite Heizmittel angeordnet, mit denen das vorkonditionierte Material auf eine Temperatur von zumindest 350° C erwärmt werden kann. Ferner sind in der Pyrolysezone Rückführungsmittel vorgesehen, mit denen der Feststoffanteil des (insbesondere im stromabwärtigen Teil der Pyrolysezone) gebildeten pyrolysierten Materials zumindest teilweise in den der Vorkonditionierungszone zugewandten Bereich der Pyrolysezone (also den stromaufwärtigen Teil der Pyrolysezone) rückführbar ist. Die Rückführungsmittel sind dabei so ausgebildet, dass die Rückführung des Feststoffanteils auf direktem Weg (also "direkt") erfolgt, das heißt, dass dieser Feststoffanteil die Pyrolysezone nicht verlässt und insbesondere die Vorkonditionierungszone nicht nochmals durchläuft. Anders ausgedrückt bedeutet "direkt", dass die Rückführungsmittel in direktem Kontakt mit dem rückzuführenden Material einerseits und dem zu pyrolysierenden Material andererseits stehen.

In der Separationseinheit erfolgt schließlich eine Auftrennung des erhaltenen pyrolysierten Materials, insbesondere in einen festen, einen flüssigen und einen gasförmigen Anteil.

Es versteht sich von selbst, dass die Anlage so ausgebildet ist, dass die Pyrolysezone so durchlässig ist, dass die gasförmigen Anteile der Pyrolyseprodukte aus dieser zumindest stromabwärts fließen können. Dem Fachmann sind die hierfür erforderlichen Maßnahmen aus dem Stand der Technik bekannt.

Erfindungsgemäß wurde erkannt, dass mittels der Rückführungsmittel in der Pyrolysezone zwei wesentliche Vorteile realisiert werden können.

Zum einen kann durch die eingestellten Verfahrensparameter, mit denen die Rückführung durch die Rückführungsmittel erfolgt (und gegebenenfalls zusätzlich durch die Verfahrensparameter der gesamten Anlage und deren Auswirkung auf die Vorgänge in der Pyrolysezone) die Verweilzeit des zu pyrolysierenden Materials in der Pyrolysezone direkt und auf einfachem Wege beeinflusst werden. Daneben kann aber natürlich auch durch die Geometrie der Rückführungsmittel eine Beeinflussung erfolgen.

Zum anderen wird durch die direkte Rückführung zumindest des Feststoffanteils des pyrolysierten Materials in den stromaufwärtigen Teil der Pyrolysezone und insbesondere bis zum Anfang der Pyrolysezone, gewährleistet, dass frisch gebildetes pyrolysiertes Material sofort mit noch nicht pyrolysiertem, vorkonditioniertem Material in Kontakt gebracht werden kann. Diese Kontaktierung des frisch gebildeten pyrolysierten Materials mit dem vorkonditioniertem Material ist wesentlich für das mit dem erfindungsgemäßen Verfahren erzielte Produktspektrum. Dem Verfahren und der vorstehend beschriebenen Anlage liegt nämlich die Erkenntnis zugrunde, dass das frisch gebildete pyrolysierte Material durch seine erhöhte Oberfläche (durch Ausgasung der flüchtigen Phase) und als Katalysator für die Pyrolyse des vorkonditionierten Materials wirkt und dass insbesondere der frisch gebildete Katalysator zu einem komplett veränderten Produktspektrum des gebildeten pyrolysierten Materials führt. Insbesondere kann ein deutlich erhöhter Wasserstoff-Anteil im Pyrolysegas erzielt werden, ein Pyrolyseöl mit einer sehr niedrigen Säurezahl generiert werden und festes Pyrolyseprodukt erhalten werden, das sich als Dünger oder Bodenverbesserer eignet.

Gemäß einer Ausführungsform sind die Rückführungsmittel zumindest im stromaufwärtigen Teil der Pyrolysezone so ausgebildet, dass sie nicht nur eine Rückführung pyrolysierten Materials gewährleisten, sondern zusätzlich auch noch eine Durchmischung von pyrolysiertem Material und vorkonditioniertem Material ermöglichen. Unter Rückführungsmittel wird dementsprechend im Rahmen der vorliegenden Erfindung nicht genau ein konkretes Rückführungsmittel verstanden, vielmehr kann auch eine Kombination verschiedener Rückführungsmittel und insbesondere verschiedener Geometrien eines bestimmten Rückführungsmitteltyps verstanden werden. So ist im stromabwärtigen Teil der Pyrolysezone im Wesentlichen ein Transport in Richtung des stromaufwärtigen Teils sinnvoll; im stromaufwärtigen Teil steht aber die Durchmischung des festen pyrolysierten Materials mit dem vorkonditionierten Material im Vordergrund. Besonders wesentlich ist diese Durchmischung in dem Bereich der Pyrolysezone, der direkt an die Vorkonditionierungszone grenzt. Als Beginn der Pyrolysezone wird anmeldungsgemäß der Bereich der Anlage bzw. des Reaktors angesehen, in dem eine Temperatur von mehr als 150 °C vorherrscht und in dem gleichzeitig Rückführungsmittel angeordnet sind. Der Beginn der Pyrolysezone ist allerdings spätestens dann erreicht, wenn (auch ohne dass bereits Rückführungsmittel vorhanden sind) eine Temperatur von mehr als 350 °C vorherrscht. (d.h. die Temperatur des zu pyrolysierenden Materials so hoch ist, dass in signifikantem Ausmaß Pyrolyseprodukte, insbesondere gasförmige Pyrolyseprodukte, entstehen). Mit anderen Worten kann die Pyrolysezone sich in Teilzonen untergliedern, wobei nicht in allen Teilzonen Rückführungsmittel angeordnet sind. Sie kann aber auch über den gesamten Bereich die Rückführungsmittel aufweisen.

Wie bereits ausgeführt, kann mit der erfindungsgemäßen Anlage die Verweilzeit des Pyrolyseguts in der Pyrolysezone mit einer sehr großen Variationsbreite eingestellt werden. Insbesondere können die Rückführungsmittel so ausgebildet sein, dass während des Betriebs der Anlage kontinuierlich eine Rückführung des gebildeten festen pyrolysierten Materials erfolgt, und zwar derart, dass im stromaufwärtigen Teil der Pyrolysezone eine Durchmischung mit dem vorkonditionierten Material erfolgt. Hierbei sind insbesondere zwei Alternativen denkbar:

; Einerseits kann beispielsweise mittels einer Doppelschnecke eine stetige Rückförderung erfolgen, wobei zumindest im stromaufwärtigen Teil für die Durchmischung erforderliche Aussparungen der Schneckenelemente vorgesehen sind.

Andererseits ist auch ein Betrieb der Anlage mit einem ersten und einem zweiten Betriebszustand möglich. Im Realbetrieb wird durch ein "ineinander Übergehen" der beiden Betriebszustände im Regelfall ein quasikontinuierlicher Betrieb erfolgen.: Im ersten Betriebszustand erfolgt ein Vorschub des vorkonditionierten Materials (insbesondere durch in der Vorkonditionierungszone angeordnete Fördermittel und/oder über Mittel, mit denen im Beschickungsbereich und/oder der Vorkonditionierungszone ein entsprechend hoher Druck aufgebaut werden kann); durch diesen Vorschub wird dann das in der Pyrolysezone vorliegende Material im Wesentlichen in Richtung der Separationseinheit (also stromabwärts) bewegt.

Im zweiten Betriebszustand erfolgt kein Vorschub des vorkonditionierten Materials in die Pyrolysezone oder nur ein Vorschub in sehr geringem Ausmaß, sodass die Rückführungsmittel in der Pyrolysezone ihren Hauptzweck erfüllen können und pyrolysiertes Material stromaufwärts durch die Pyrolysezone zurücktransportieren (also in den der Vorkonditionierungszone zugewandten Bereich der Pyrolysezone). Durch eine entsprechende Taktung des ersten und des zweiten Betriebszustands mit einem hierfür vorgesehenen Steuerelement kann zur Optimierung des erhaltenen Produktspektrums die Verweilzeit des Pyrolyseguts in der Pyrolysezone genau eingestellt werden und außerdem auch das Mischungsverhältnis von Katalysator (also des Feststoffanteils des pyrolysierten Materials) und vorkonditioniertem Material eingestellt werden.

Gemäß einer weiteren Ausführungsform ist die erfindungsgemäße Anlage derart ausgebildet, dass im Beschickungsbereich und/oder in der Vorkonditionierungszone die Möglichkeit besteht, die Anlage im Wesentlichen sauerstofffrei zu betreiben. Hierfür können insbesondere Inertgaszuleitungen und dergleichen vorgesehen sein.

Die erfindungsgemäße Anlage, und hier wiederum insbesondere die Pyrolysezone der Anlage, kann insbesondere nach Art eines mehrstufigen SchneckenoderDrehrohrreaktors ausgebildet sein.

Gemäß einer Ausführungsform kann die erfindungsgemäße Anlage ein röhrenförmiger Reaktor sein, bei dem die Vorkonditionierungszone und die Pyrolysezone direkt ineinander übergehen. Hierdurch kann eine effektive Kontaktierung des vorkonditionierten Materials mit dem in stromabwärtigen Teil der Pyrolysezone gebildeten festen, katalytisch wirkenden Pyrolyseprodukt erfolgen.

Gemäß einer weiteren Ausführungsform ist in der erfindungsgemäßen Anlage der Pyrolysezone eine Nachkonditionierungszone nachgeschaltet. Diese Nachkonditionierungszone ist dann zwischen Pyrolysezone und Separationseinheit angeordnet. In der Nachkonditionierungszone kann eine Veredelung des pyrolysierten Materials erfolgen. Beispielsweise ist hierbei eine Stabilisierung der Kohle (insbesondere durch Reduzierung des Sauerstoff/Kohlenstoff- und des Wasserstoff/Kohlenstoff-Verhältnisses) und/oder eine Erhöhung des Heizwerts der gasförmigen Pyrolyseprodukte (etwa über die Wassergas-Shift-Reaktion und/oder die Dampfreformierung) oder einer Erhöhung der Qualität der gebildeten Pyrolyseöl. In der Nachkonditionierungszone sind daher im Regelfall dritte Heizmittel angeordnet, mit denen die Temperatur, des Materials aus der Pyrolysezone, gehalten werden kann oder auch erhöht werden kann. Anders als in der Pyrolysezone sind in der Nachkonditionierungszone üblicherweise keine Rückführungsmittel angeordnet. Als Beginn der Nachkonditionierungszone wird anmeldungsgemäß der Bereich der Anlage bzw. des Reaktors angesehen, in dem keine Rückführungsmittel mehr angeordnet sind. Zusätzlich kann in dieser Zone die Temperatur auch höher sein als in der Pyrolysezone und insbesondere auch mehr als 700 °C betragen.

Gemäß einer weiteren Ausführungsform sind in der Vorkonditionierungszone der erfindungsgemäßen Anlage (und üblicherweise ebenso in der Nachkonditionierungszone - sofern diese in der Anlage enthalten ist) Fördermittel zum Transport des Ausgangsmaterials zur Pyrolysezone (bzw. im Fall der Nachkonditionierungszone Fördermittel zum Transport des pyrolysierten Materials zur Separationseinheit) vorgesehen. Zu nennen sind als Fördermittel (sowohl für die Vorkonditionierungszone als auch für die Nachkonditionierungszone) Förderschnecken und/oder Bandförderer, beispielsweise auf einer im Wesentlichen entlang der Längsachse der Vorkonditionierungszone und gegebenenfalls der Nachkonditionierungszone verlaufenden Welle angeordnete Förderschnecken.

Gemäß einer weiteren Ausführungsform sind die Rückführungsmittel auf einer im Wesentlichen entlang der Längsachse der Pyrolysezone verlaufenden Welle angeordnet. Hierbei kann es sich - um einen besonders einfachen Aufbau der Anlage zu gewährleisten - um eine Welle handeln, auf der nicht nur die Rückführungsmittel angeordnet sind, sondern auch die Transportmittel (zum Beispiel Förderschnecken) im Bereich der Vorkonditionierungszone und gegebenenfalls auch einer vorhandenen Nachkonditionierungszone. Daneben kann - sofern die Rückführungsmittel nicht auf einer Welle laufen - auch nur die Fördermittel der Vorkonditionierungszone und der Nachkonditionierungszone auf derselben Welle (die dann üblicherweise durch die Pyrolysezone verläuft) angeordnet sein.

Gemäß einer Alternative zur vorstehenden Ausführungsform können die Rückführungsmittel auf der Reaktorinnenwandung der Pyrolysezone angeordnet sein. Dabei kann dann beispielsweise eine Bewegung der Rückführungsmittel dadurch erfolgen, dass die Reaktorwandung gedreht wird. Die Bewegung der Rückführungsmittel kann aber auch unabhängig hiervon stattfinden. Im Unterschied hierzu können die Rückführungsmittel bei der auf der Welle angeordneten Ausführungsform durch die Welle selbst (entweder gleichzeitig mit den Fördermitteln in der Vorkonditionierungszone und gegebenenfalls Nachkonditionierungszone) betrieben werden, insbesondere aber unabhängig von den Fördermitteln der Vorkonditionierungszone, beispielsweise wenn in den vorstehend erläuterten zwei Betriebszuständen gearbeitet wird.

Die Rückführungsmittel gemäß der vorliegenden Erfindung können insbesondere rückmischende Schneckenelemente, gegenläufige Schneckenelemente, Rückführungsstege (insbesondere auf der Reaktorwandung) und/oder Rückführungshaken sein. Die Geometrie der Rückführungshaken ist insbesondere derart gewählt, dass eine Durchmischung von pyrolysiertem Material und vorkonditioniertem Material mittels eines stromaufwärts gewandten Impulses gewährleistet ist. Wesentlich für die Rückführungsmittel ist insbesondere, dass mit diesen eine "Gegenförderbewegung" realisierbar ist, sodass entweder ein Teilstrom der in der Pyrolysezone vorliegenden Materialströme stetig stromaufwärts in der Pyrolysezone geführt werden kann oder im Betrieb mit zwei Betriebszuständen zumindest in einem der beiden Betriebszustände ein Transport fester Pyrolyseprodukte stromaufwärts realisierbar ist.

Gemäß einer weiteren Ausführungsform ist die Anlage zur thermokatalytischen Behandlung derart ausgebildet, dass die Längsachse der Pyrolysezone in Bezug auf eine Horizontalebene geneigt ist, üblicherweise in einem Winkel von 0° bis 45°, insbesondere von 0° bis 25° und beispielsweise von 0° bis 10° geneigt. Die Neigung ist im Regelfall derart gewählt, dass die Schwerkraft innerhalb der Pyrolysezone so auf das in der Pyrolysezone vorliegende Material einwirkt, dass dieses (zumindest in dem Fall, dass kein Vorschub in der Vorkonditionierungszone stattfindet) in stromaufwärtiger Richtung bewegt wird und/oder leichter in stromaufwärtiger Richtung durch die Rückführungsmittel transportiert werden kann.

Zumindest eine der vorstehend definierten Aufgaben wird auch durch das nachfolgende Verfahren gelöst. Dieses Verfahren ist insbesondere mit der vorstehend beschriebenen Anlage durchführbar, sodass sämtliche Ausführungsformen der vorstehend beschriebenen Anlage auch für das Verfahren gelten und umgedreht.

Das Verfahren zur thermokatalytischen Behandlung von Material, insbesondere von Abfallmaterialien, umfasst folgende Schritte:

A) Vorkonditionierung
B) Pyrolyse
D) Separation

Fakultativ kann auch ein Schritt C) Nachkonditionierung enthalten sein.

In Schritt A) wird das zu behandelnde Ausgangsmaterial in einer Vorkonditionierungszone zumindest auf eine Temperatur von 150° C, meist auf eine Temperatur von 250° C und häufig auf eine Temperatur von 350° C erwärmt. Hierbei wird vorkonditioniertes Material erhalten.

In Schritt B) wird das vorkonditionierte Material in der Pyrolysezone auf eine Temperatur von 250° C bis 700° C, insbesondere von 350° C bis 500° C erwärmt. Die Verweilzeit des zu pyrolysierenden Materials in der Pyrolysezone betragen dabei 1 Minute bis 1 Stunde, insbesondere 1 Minute bis 30 Minuten, beispielsweise 5 Minuten bis 15 Minuten. Das am Ende der Pyrolysezone erhaltene Material wird "pyrolysiertes Material" genannt. Unter Verweilzeit wird anmeldungsgemäß die mittlere Verweilzeit des Festanteils verstanden, den ein Feststoffteilchen (z.B. Pellet) vom Eintritt in die Pyrolysezone bis zum Austritt benötigt. Die Verweilzeit wird anmeldungsgemäß mittels eines Referenzverfahrens an einem maßstabsgetreuen Plexiglas-Kaltmodell ermittelt (das der erfindungsgemäßen Modell bis auf die Materialien, aus denen die thermokatalytische Anlage gebildet ist, und die Heizeinrichtungen nachgebildet ist (insbesondere im Hinblick auf Rückführungsmittel und etwaige Fördermittel). Als "Ausgangsmaterial" finden Holzpellets der Größenklasse D25 mit einer Länge von 20 mm bis 30 mm Verwendung. Zunächst werden handelsübliche Holzpellets durch ein Kaltmodel geführt. Nachdem alle Zonen mit Holzpellets gefüllt sind, wird eine Charge von 25 eingefärbten Holzpellets zugegeben und die Zeit jedes einzelnen der eingefärbten Pellets gemessen, die dieses vom Eintritt bis zum Austritt aus der Pyrolysezone benötigt. Die mittlere Verweilzeit kann direkt optisch gemessen werden (insbesondere, wenn dies aufgrund des Verhältnisses von Reaktordurchmesser und Pelletgröße möglich ist). Bei größeren Reaktoren (die eine rein optische Detektion nicht zulassen) oder wenn die Bereitstellung eines Plexiglasmodells zu aufwendig ist, kann die Verweilzeit auch indirekt bestimmt werden, indem die Zeit jedes einzelnen Pellets gemessen wird, die vom Eintritt in die Vorkonditionierungszone bis zum Austritt aus der Nachkonditionierungszone oder - falls letztere nicht vorhanden ist - aus der Pyrolysezone bestimmt wird und die (konstante) Durchtrittszeit durch die Vorkonditionierungszone und eine gegebenenfalls vorhandene Nachkonditionierungszone hiervon abgezogen wird. Die Mittlere Verweilzeit $\bar{t}$ ergibt sich mit dem Quotienten aus Summe der Verweilzeiten $t_i$ durch Anzahl der gefärbten Pellets, wobei zwei Durchläufe des genannten Referenzverfahrens erfolgen:

$$\bar{t} = \frac{\sum_{i=1}^{n} t_i}{n}$$

In Schritt B) kann die Pyrolyse kontinuierlich oder teilkontinuierlich erfolgen, wobei teilkontinuierlich insbesondere auf die vorstehend beschriebene Verfahrensführung mit zwei Betriebszuständen bezogen ist und kontinuierlich ein stetiges Rückführen an pyrolysiertem Material in den stromaufwärtigen Bereich der Pyrolysezone bedeutet. Wie vorstehend bezüglich der Anlage ausgeführt, erfolgt diese Rückführung direkt in den der Vorkonditionierungszone zugewandten Bereich der Pyrolysezone, wobei zumindest in diesem stromaufwärtigen Bereich der Pyrolysezone eine Vermischung des pyrolysierten Materials mit dem vorkonditioniertem Material erfolgt.

Wie vorstehend ausgeführt wurde, ist die Rückführung von festem, pyrolysiertem Material insbesondere in dem Bereich sinnvoll, in dem eine Zersetzung des zu pyrolysierenden vorkonditionierten Materials beginnt, da die Temperatur bereits hoch genug ist. Dies ist insbesondere der dem Vorkonditionierungsbereich direkt nachfolgende Teil der Pyrolysezone.

Im Unterschied zu Verfahren des Stands der Technik sind für das erfindungsgemäße Verfahren keine separaten Wärmeträger erforderlich, die der Anlage zur thermokatalytischen Behandlung zugeführt werden. Prinzipiell kann auch die zusätzliche Verwendung von Wärmeträgern erfolgen. Allerdings ist dies im Regelfall allein deshalb nicht notwendig, weil die katalytisch wirksamen erfindungsgemäß rückgeführten festen Pyrolyseprodukte bereits den Zweck der Wärmeübertragung erfüllen.

Als Ausgangsmaterialien für das erfindungsgemäße Verfahren kommen insbesondere Abfallstoffe und Biomasse in Betracht. Daneben ist aber auch eine Verwertung von Elektronikschrott, Altkunststoffen wie Kraftfahrzeugreifen und dergleichen denkbar. Bei diesen Ausgangsmaterialien handelt es sich um Kohlenstoffbasiertes Material (d.h. Material mit Kohlenstoff-Anteilen größer 50 Gew.-% im trockenen Zustand) wie sie - bezogen auf Biomasse - beispielsweise in cellulosehaltigen Materialien und dergleichen vorliegen. Häufig wird die Biomasse eine Mischung aus Hemicellulose, Cellulose, Lignin und anderer organischer Verbindungen (letztere meist nur in kleinen Mengen) enthalten. Als zweite Hauptgruppe für die Ausgangsmaterialien neben cellulosehaltigen Materialien (wie sie beispielsweise in Gärresten und dergleichen vorliegen) sind Gülle-haltige Produkte und Klärschlämme (insbesondere aus der Abwasserbehandlung) zu nennen. Neben derartigen Abfallprodukten ist aber prinzipiell auch Material wie Laub, Stroh, Treber, Traubentrester und Zitruspulpen als Ausgangsmaterial denkbar. Es versteht sich von selbst, dass auch Gemische dieser vorgenannten Materialien untereinander oder Gemische mit anderen Materialien als Ausgangsmaterial geeignet sind.

Viele der vorgenannten Materialien werden derzeit teuer entsorgt oder führen als "Dünger" im landwirtschaftlichen Bereich zu einer Überdüngung der Ackerflächen. Auf der anderen Seite ist beispielsweise in Gärresten von Biogasanlagen noch 25% des energetisch nutzbaren Potentials enthalten. Im Regelfall wird nach dem Stand der Technik dieses Potential nicht genutzt. Das erfindungsgemäßen Verfahrens stellt nun eine hocheffiziente Nutzung derartiger Biomaterialien zur Verfügung, bei dem ausschließlich oder zumindest größtenteils hochwertige Produkte erhalten werden.

Gemäß einer Ausführungsform kann die Pyrolyse bei Normaldruck (1013 hPa) innerhalb der Pyrolysezone erfolgen; der Druck kann aber auch darüber liegen, beispielsweise bei mehr als 200 hPa darüber oder mehr als 1000 hPa darüber. Im Einzelfall können sogar Drücke von bis zu 30000 hPa vorliegen. Über den Druck, der auch in den unterschiedlichen Bereichen bzw. Zonen der erfindungsgemäßen Anlage unterschiedlich hoch ausgebildet sein kann, kann auch der Vorschub innerhalb der gesamten Anlage gesteuert werden. Beispielsweise kann die Trennung der Pyrolyseprodukte bei höherem Druck erfolgen, sodass Kohlenwasserstoffe bereits aufgrund der Druckführung von Wasserstoff, Kohlendioxid und Kohlenmonoxid abtrennbar ist.

Gemäß einer Ausführungsform wird das Verfahren so durchgeführt, dass in Schritt B) - wie vorstehend bezüglich der Anlage beschrieben - mit zwei Betriebszuständen gearbeitet wird.

Gemäß einer weiteren Ausführungsform wird, wie bereits vorstehend angedeutet, zwischen Schritt B) und in Schritt D) eine Nachkonditionierung durchgeführt, bei der zumindest der Feststoffanteil des pyrolysierten Materials bei einer Temperatur von 450° C bis 800° C behandelt wird, mit der Maßgabe, dass die Temperatur in Schritt C) nicht kleiner ist als die in Schritt B) sodass hochwertigere Pyrolyseprodukte erhalten werden.

Gemäß einer weiteren Ausführungsform werden die Ausgangsmaterialien so gewählt, dass zumindest eines der folgenden chemischen Elemente enthalten ist: Zink, Eisen, Platin, Rhenium, Chrom, Kupfer, Mangan, Nickel, Titan, Aluminium, Silizium. Dieses Element muss nicht in elementarer Form vorliegen, es kann auch mit ionischer Form vorliegen oder in gebundener Form (beispielsweise als oxidische Verbindung oder in Form eines Komplexes). Derartige Metalle sind beispielsweise in Gülle und dergleichen regelmäßig enthalten, etwa weil sie Spurenelemente darstellen oder in anderer Form dem Stoffkreislauf zugeführt werden, sie können aber aufgrund der spezifischen Herstellungsbedingungen, in denen bestimmte Abfallstoffe erhalten wurden, in die Abfallstoffe eingetragen sein, beispielsweise Kupfer aus Kupferkesseln. Erfindungsgemäß wurde erkannt, dass insbesondere bei den vorstehenden Metallen eine hervorragende katalytische Wirkung des festen Pyrolyseprodukts als Katalysator in der Pyrolysezone erfolgt. Um dies zu gewährleisten, kann Biomasse, die diese Metalle nicht enthält, auch Biomasse mit hohen Metallanteilen, beispielsweise Gülle, zugesetzt werden, um eine besonders effiziente Verfahrensführung zu gewährleisten. Daneben kann aber auch - insbesondere aus Abfallmaterialien (und hier wiederum nicht biologischen Abfallmaterialien) das Metall in kleinen Mengen dem Ausgangsmaterial zugesetzt werden.

Gemäß einer Ausführungsform wird als Ausgangsmaterial ein Material mit einem Feuchtegehalt größer 10 Gew.-% eingesetzt. Es ist sogar möglich, Material mit einem Feuchtegehalt von bis zu 25 Gew.-% einzusetzen; auch Material mit einem Feuchtegehalt von bis zu 40 Gew.-% kann verwendet werden. Das erfindungsgemäße Verfahren liefert aber soviel werthaltige Pyrolyseprodukte, dass zusätzlich zu einem Betrieb der Heizmittel der erfindungsgemäßen Anlage durch thermische Nutzung der Pyrolyseprodukte eine Vortrocknung von feuchteren - oder genereller: für ein angestrebtes Produktspektrum zu feuchten - Ausgangsmaterialien möglich ist. Die hohen Wassergehalte sind erfindungsgemäß möglich, da im Rahmen der verwendeten mittleren Pyrolyse insbesondere durch die homogene und heterogene Wassergas-Shiftreaktion sowie das Steam Reforming Wasser aus dem Einsatzstoff verbraucht und Wasserstoff gebildet werden kann. Das erfindungsgemäße Verfahren zeichnet sich nun im Regelfall insbesondere dadurch aus, dass durch die katalytische Wirksamkeit der festen Pyrolyseprodukte eben dieser Wasserstoff in verstärktem Maß gebildet wird. Demnach sind für das erfindungsgemäße Verfahren Ausgangsmaterialien mit deutlich höheren Wasser-Gehalten als nach dem Stand der Technik einsetzbar und sogar höchst sinnvoll. Im Unterschied dazu ist beispielsweise bei der langsamen Pyrolyse eine natürliche Grenze bei 25 Gew.-% Wasser gegeben, bei der Flash-Pyrolyse ist üblicherweise sogar ein Wasser-Gehalt unter 10 Gew.-% bzw. eine ausgeprägte Vortrocknung des Ausgangsmaterials vonnöten.

Gemäß einer weiteren Ausführungsform wird Schritt B) so durchgeführt, dass in der Pyrolysezone eine Aufheizrate des Einsatzgutes von 1 bis 10° C/s, insbesondere von 2 - 10° C/s eingestellt ist. Ferner wird gemäß einer weiteren Ausführungsform das Verfahren so durchgeführt, dass Ausgangsmaterial mit einer mittleren Partikelgröße größer 1 mm, insbesondere von 5 bis 40 mm, eingesetzt wird (die Partikelgröße wird hierbei mittels Siebverfahren bestimmt). Mittels der vorgenannten Aufheizraten und/oder Partikelgrössen, kann eine besonders effektive Durchführung der mittleren Pyrolyse erfolgen. Im Unterschied dazu wird für schnelle Pyrolysen und Flash-Pyrolysen eine deutlich schnellere Aufheizrate und damit einhergehend eine deutlich kleinere Partikelgröße benötigt.

Die vorstehend definierten Aufgaben werden (zumindest teilweise) durch die mit dem vorstehend beschriebenen Verfahren und der vorstehend beschriebenen Anlage erhaltenen Pyrolyseprodukte gelöst. Im Regelfall werden mit dem beschriebenen Verfahren etwa 30 bis 50 Gew.-% Flüssigphase (wobei 10 - 15 Gew.-% auf Öle entfällt, die neben einer abtrennbaren wässrigen Phase gebildet werden), 20 bis 60 Gew.-% Gasphase und 15 bis 40 Gew.-% Feststoff, insbesondere Kohle und Kohle-artiger Feststoff erzeugt. Die Aggregatszustände beziehen sich hierbei auf Raumtemperatur (20 °C). Im Gasproduktstrom liegen sofern keine Nachkonditionierung erfolgt bis zu 20 Gew.-% Wasserstoff vor; durch Nachkonditionierung mittels Steam-Reforming kann der Wasserstoffanteil im Gasproduktstrom auf bis zu 50 Gew.-% erhöht werden. Dies stellt gegenüber den vergleichbaren Verfahren nach dem Stand der Technik eine drastische Erhöhung dar, die ohne sich hierauf beschränken zu wollen, auf den katalytischen Effekt des rückgeführten festen Pyrolysematerials zurückgeführt wird. Der katalytische Effekt scheint hier darin zu bestehen, dass das Cracken von Alkylketten beschleunigt wird. Teer wird mit dem erfindungsgemäßen Verfahren nicht oder nur in sehr geringem Ausmaß gebildet und kann gegebenenfalls durch einfache Maßnahmen wie eine RME-Wäsche aus dem Gasstrom entfernt werden.

Die erfindungsgemäß erhaltenen Öle zeichnen sich vor allem durch hohe Heizwerte aus, die üblicherweise größer ist als 20 MJ/kg und vielfach auch größer ist als 30 MJ/kg sind. Daneben besitzen einen niedrigen Wasser-Gehalt und niedrige Säurezahlen. Aufgrund dieser Eigenschaften sind sie nicht nur mit Biodiesel oder Pflanzenöl mischbar; sie sind sogar zumindest abgemischt mit anderen Stoffen direkt als Biodiesel und somit motorisch verwendbar. Die Pyrolyseöle weisen insbesondere Wasser-Gehalte < 2 Gew.-% auf und Säurezahlen < 15 mg KOH/g, insbesondere < 4 mg/KOH/g, wobei insbesondere auf Ausbeuten von bis zu 15 Gew-% Bezug genommen wird.

Bei den meisten Ausgangsmaterialien werden zudem Pyrolyseöle erhalten, bei denen der Sauerstoffgehalt des wasserfreien Pyrolyseöls deutlich kleiner als 16 Gew.-% ist. Oft liegt der Sauerstoffgehalt bei kleiner 8 Gew.-%. Das Verhältnis Sauerstoff zu Kohlenstoff (also der Quotient aus Sauerstoffanteil und Kohlenstoffanteil jeweils in Gew.-%) ist üblicherweise kleiner als 0,15 und ist üblicherweise auch kleiner als 0,12. Das Gewichtverhältnis Wasserstoff/Kohlenstoff ist dagegen häufig größer als 0,08, insbesondere größer als 0,10 und oft auch größer als 0,11. Im Ergebnis kann festgestellt werden, dass die meisten Pyrolyseöle, die mit dem erfindungsgemäßen Verfahren herstellbar sind, einen Kohlenstoff-Gehalt größer 75 Gew.-%, einen Wasserstoff-Gehalt von 6 bis 11 Gew.-% und einen Sauerstoffgehalt von bis zu 9 Gew.-% aufweisen. Ferner beträgt der Stickstoff-Gehalt üblicherweise 1,5 bis 4,5 Gew.-%, der im Fall von Klärschlämmen allerdings auch höher liegen kann.

Die in der Beschreibung, den Ansprüchen und den Beispielen angegebenen Werte wurden dabei stets folgendermaßen bestimmt:

Säurezahl gemäß DIN 51558-1: 1979-07,

Sauerstoffgehalt gemäß DIN EN 15296 (berechnet);

Kohlenstoff-Gehalt, Wasserstoff-Gehalt und Stickstoff-Gehalt gemäß DIN EN 15104,

Heizwert (qp, led) gemäß DIN EN 14918,

Aschegehalt gemäß DIN EN 14775, allerdings bei 815°C.

Es sei an dieser Stelle darauf hingewiesen, dass sich (sofern nicht explizit anders angegeben) die Gehalte an Wasserstoff, Sauerstoff, Kohlenstoff und Stickstoff entsprechend den gängigen Messmethoden nur auf das Gewicht der organischen Komponenten des Pyrolyseöls und der Asche beziehen; im Pyrolyseöl enthaltenes Wasser wird dementsprechend nicht berücksichtigt.

Beispielhaft wird die Erfindung nachfolgend noch näher anhand von Figuren und eines konkreten Beispiels beschrieben:

7

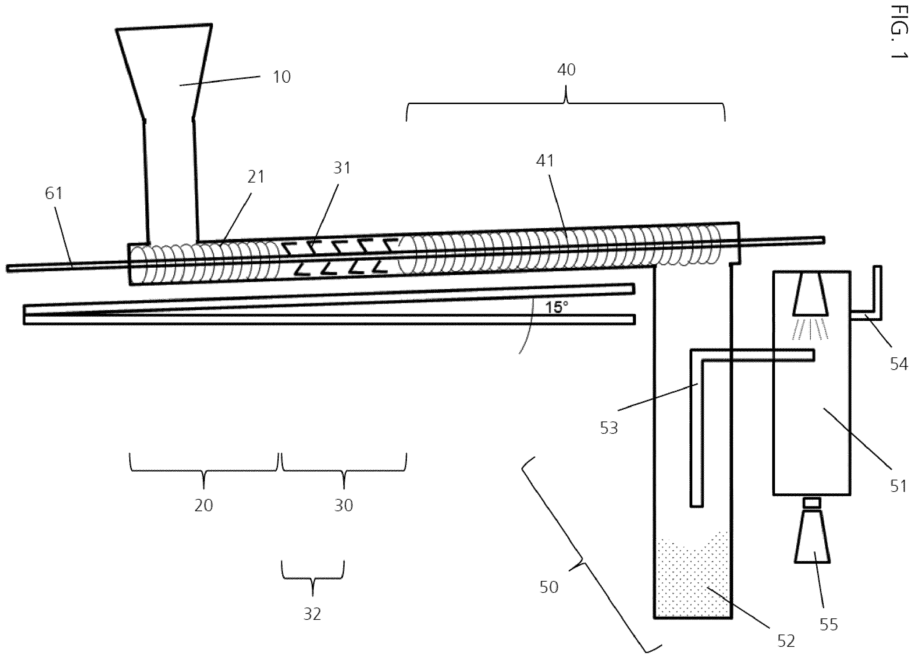

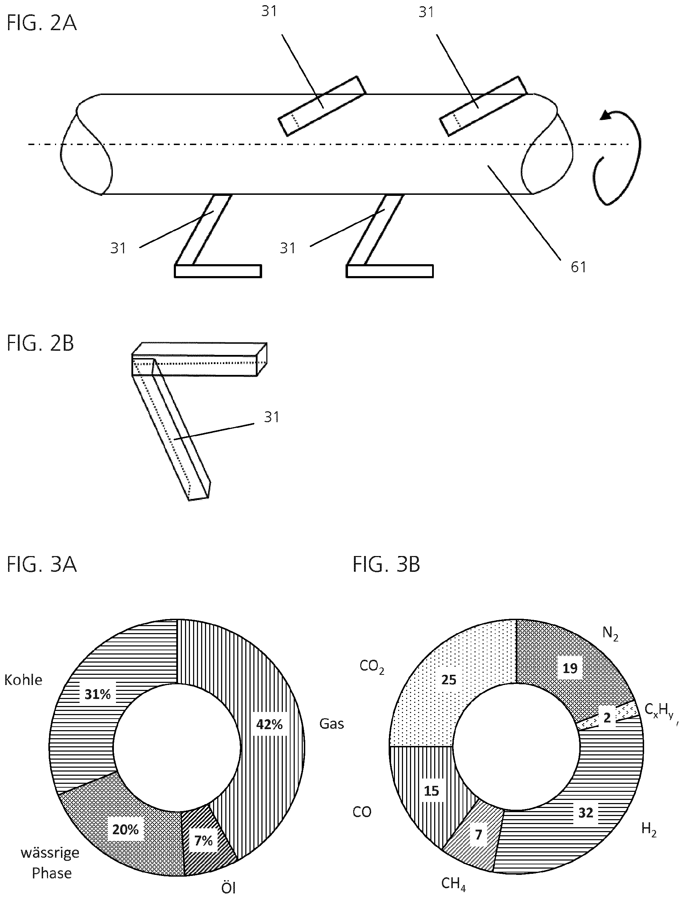

Figur 1 zeigt einen röhrenförmigen Reaktor, der sich in eine Vorkonditionierungszone 20, eine Pyrolysezone 30 und eine Nachkonditionierungszone 40 unterteilt. Der stromaufwärtige Teil der Pyrolysezone 30 ist der "der Vorkonditionierungszone 20 zugewandte Bereich" 32. Das zu pyrolysierende Material wird diesem Reaktor über einen luftdichten Beschickungsbereich 10 zugeführt über eine in der Vorkonditionierungszone 20 angeordnete Förderschnecke 21 wird dieses in die Pyrolysezone befördert. In der Pyrolysezone 30 liegen hier als Rückführungsmittel 31 Rückführungshaken vor. In der Nachkonditionierungszone 40 ist wieder eine Förderschnecke 41 angeordnet. Die Förderschnecken 21 und 41 sowie die Rückführungsmittel 31 sind auf ineinderlaufenden Wellen 61 angeordnet. Die Heizmittel sind nicht gezeigt. Die Längsachse des Reaktors ist in Bezug auf die Horizontalebene in einem Winkel von 15° geneigt. Dem Reaktor nachgeornet ist die Separationseinheit 50, die sich in einen gasdichten Kohleaustrag 52, einen mit dem Kohleaustrag 52 über eine Zuleitung 53 verbundenen, mit Biodiesel betriebenen Sprühabsorber 51, der die flüssige von der Gasphase trennt, sowie eine Trenneinheit 55 zur Trennung des Pyrolysewassers von der Ölphase gegliedert. Die Gasphase kann über einen Auslass 54 aufgefangen werden. Figur 2A zeigt eine Detailansicht von Figur 1. Hier ist ein Ausschnitt der Welle 61 mit vier darauf angeordneten Rückführungshaken bzw. Rückführungsmitteln 31 abgebildet. Die Rückführungshaken sind überlappend auf der Welle angeordnet, so dass kein Leerwellenstück vorhanden ist. Zwei nicht sichtbare weitere Haken befinden sich auf der Rückseite der Welle 61. Figur 2B zeigt eine nochmals vergrößerte Ansicht eines Rückführungshakens bzw. Rückführungsmittels 31

Beispielhaft wird das Verfahren mit Gärrest in Form von Pellets als Einsatzstoff mittels der vorstehenden Anlage gemäß Figur 1, 2A und 2B durchgeführt. Hinsichtlich des röhrenförmigen Reaktors entsprechen die Größenverhältnisse in Figur 1 und Figur 2A in etwa der Realität. Der röhrenförmige Reaktor hat eine Länge von etwa einem Meter und einen Durchmesser von etwa 10 bis 15 cm. Die Welle 61 hat einen Durchmesser von etwa 5 cm, so dass die Rückführungshaken relativ nahe an die Reaktorinnenwandung in der Pyrolysezone 30 heranreichen. Die eingesetzten Gärrestpellets stammen aus Gärrest von einer Biogasanlage in Deutschland und wurden pelletiert angeliefert. Der Durchmesser der Pellets betrug 6 mm. Eine Analyse des Einsatzgutes ergab die Kennwerte gemäß Tabelle 1 (hierbei bezeichne $H_u$ den unteren Heizwert und $H_o$ den oberen Heizwert) und die elementaranalytischen Daten gemäß Tabelle 2.

Tabelle 1:

| Trockensubstanz | Glühverlust | $H_u$ | $H_o$ | $H_u$ | $H_o$ |
|---|---|---|---|---|---|
| | | Im Anlieferungszustand | | Trocken | |
| [%] | | [MJ/kg] | | | |
| 88,9 | 90,3 | 15,7 | 17,1 | 18,0 | 19,3 |

Tabelle 2:

| C | H | N | O | Cl | S |
|---|---|---|---|---|---|
| [%] | | | | | |
| 46,8 | 5,7 | 1,78 | 35,6 | 0,32 | 0,31 |

Die Temperatur wurde in der Voronditionierungszone 20 auf 150 °C eingestellt. In der Pyrolysezone 30 wurde weiter auf 400 °C aufgeheizt. Die Nachkonditionierungszone 40 wird auf 700 °C eingestellt. Die gesamte Anlage wurde nicht druckbeaufschlagt. Durch die Pyrolyse im Bereich B) herrscht jedoch ein leichter Überdruck, der den Prozess stromabwärts leitet. Zudem wurde die Ausführungsform mit zwei Betriebszuständen gewählt, wobei alternierend auf 10 s im Betriebszustand 1 (Vorschub) folgen 15 s im Betriebszustand 2 (kein Vorschub). Nach Durchlaufen der Separationseinheit 50 wie in Figur 1 gezeigt, wird das Produktspektrum gemäß Figur 3A (Angaben in Gew.-%) erhalten. Der gasförmige Anteil enthält wiederum die Gase gemäß Figur 3B (Angaben in Gew.-%).

Die Analysen für die weiteren Fraktionen ergaben :

Tabelle 3 (wässrige Phase)

| C | H | N | O | S | $H_o$ |
|---|---|---|---|---|---|
| [%] | | | | | [MJ/kg] |
| 4,9 | 1,7 | 0,99 | 11 | 0,31 | 2,4 |

Tabelle 4 (Öl)

| C | H | N | O | S |
|---|---|---|---|---|
| [%] | | | | |
| 76,8 | 7,4 | 3,8 | 8,7 | 0,6 |
| | | | | |
| Wasser | Asche | TAN | $H_u$ | $H_o$ |
| [%] | | [mg KOH/g] | [MJ/kg] | |
| 1,7 | < 0,1 | 3,8 | 32,5 | 36,3 |

Tabelle 5 (" Kohle)

| C | H | N | O | S |
|---|---|---|---|---|
| [%] | | | | |
| 65,0 | 1,16 | 1,52 | 1,3 | 0,3 |
| | | | | |
| Wasser | Asche | | $H_u$ | $H_o$ |
| [%] | | | [MJ/kg] | |
| 0,8 | 29,1 | | 23,4 | 23,7 |

Hervorzuheben ist die niedrige Säurezahl (TAN) von 3,8 mg KOH/g und der niedrige Wassergehalt des Öls (1,7 Gew.-%).

**Patentansprüche**

1.  Anlage zur thermokatalytischen Behandlung von Material, insbesondere von Abfallmaterialien, umfassend zumindest
    einen Beschickungsbereich (10) für die Zuführung zu behandelnden Ausgangsmaterials,
    eine Vorkonditionierungszone (20) in der aus dem Ausgangsmaterial vorkonditioniertes Material gebildet wird,
    eine Pyrolysezone (30), in der aus dem vorkonditionierten Material pyrolysiertes Material gebildet wird
    sowie eine Separationseinheit (50) zur Auftrennung erhaltenen pyrolysierten Materials,
    wobei in der Vorkonditionierungszone (20) erste Heizmittel zur Erwärmung des Ausgangsmaterials auf eine Temperatur von zumindest 150 °C vorgesehen sind, und wobei in der Pyrolysezone (30) zweite Heizmittel zur weiteren Erwärmung des vorkonditionierten Materials auf eine Temperatur von zumindest 350 °C und in der Pyrolysezone (30) ferner Rückführungsmittel (31) vorgesehen sind, wobei mit den Rückführungsmitteln (31) der Feststoffanteil zumindest des pyrolysierten Materials zumindest teilweise direkt in den der Vorkonditionierungszone (20) zugewandten Bereich (32) der Pyrolysezone (30) rückführbar ist sodass die Rückführungsmittel (31) in direktem Kontakt mit dem rückgeführten Material einerseits und dem zu pyrolysierenden Material andererseits stehen.

2.  Anlage nach dem vorhergehenden Anspruch,
    **dadurch gekennzeichnet, dass**
    zumindest in dem der Vorkonditionierungszone (20) zugewandten Bereich (32) der Pyrolysezone (30) die Rückführungsmittel (31) so ausgebildet sind, dass eine Durchmischung von pyrolysiertem Material und vorkonditioniertem Material erfolgen kann.

3.  Anlage nach einem der vorhergehenden Ansprüche,
    **dadurch gekennzeichnet, dass**
    die Rückführungsmittel (31) in der Pyrolysezone (30) derart ausgebildet sind, dass mit ihnen die Verweilzeit des zu pyrolysierenden Materials in der Pyrolysezone beeinflussbar ist.

9

4. Anlage nach einem der vorhergehenden Ansprüche,
   **dadurch gekennzeichnet, dass**
   die Anlage in einem ersten Betriebszustand und in einem zweiten Betriebszustand betreibbar ist, wobei im ersten Betriebszustand ein Vorschub des vorkonditioniertem Materials erfolgt und in der Pyrolysezone (30) vorliegendes Material in Richtung der Separationseinheit (50) fortbewegt wird und im zweiten Betriebszustand nur eine Rückführung pyrolysierten Materials in den der Vorkonditionierungszone (20) zugewandten Bereich (32) der Pyrolysezone (30) erfolgt.

5. Anlage nach einem der vorhergehenden Ansprüche,
   **dadurch gekennzeichnet, dass**
   die Vorkonditionierungszone (20) und Pyrolysezone (30) ineinander übergehen und in einem röhrenförmigen Reaktor angeordnet sind.

6. Anlage nach einem der vorhergehenden Ansprüche,
   **dadurch gekennzeichnet, dass**
   zwischen der Pyrolysezone (30) und der Separationseinheit (50) eine Nachkonditionierungszone (40) zur Veredelung des pyrolysierten Materials angeordnet ist, wobei in der Nachkonditionierungszone (40) dritte Heizmittel zur Erhöhung oder Konstanthaltung der Temperatur zumindest des Feststoffanteils des pyrolysierten Materials vorgesehen sind.

7. Anlage nach einem der vorhergehenden Ansprüche,
   **dadurch gekennzeichnet, dass**
   zumindest in der Vorkonditionierungszone (20) Fördermittel zum Transport des Ausgangsmaterials zur Pyrolysezone (30) vorgesehen sind, wobei das Fördermittel insbesondere eine Förderschnecke, insbesondere eine auf einer Welle (61) angeordnete Förderschnecke (21), oder ein Bandförderer ist.

8. Anlage nach dem vorhergehenden Anspruch,
   **dadurch gekennzeichnet, dass**
   die Rückführungsmittel (31) rückmischende Schneckenelemente, gegenläufige Schneckenelemente, Rückführungsstege und/oder Rückführungshaken umfassen und/oder, dass
   die Rückführungsmittel (31) auf einer Welle (61) und/oder einer Reaktorinnenwandung der Pyrolysezone (30) angeordnet sind..

9. Anlage nach einem der vorhergehenden Ansprüche,
   **dadurch gekennzeichnet, dass**
   die Längsachse der Pyrolysezone (30) in Bezug auf eine Horizontalebene in einem Winkel von 0° bis 45°, insbesondere von 0° bis 25°, beispielsweise 0° bis 10° geneigt ist.

10. Verfahren zur thermokatalytischen Behandlung von Material, insbesondere von Abfallmaterialien, mit folgenden Schritten

    A) Vorkonditionierung des zu behandelnden Ausgangsmaterials in einer Vorkonditionierungszone (20), indem das Ausgangsmaterial auf eine Temperatur von zumindest 150 °C erwärmt wird, wobei vorkonditioniertes Material gebildet wird,
    B) Pyrolyse des vorkonditionierten Materials unter Abwesenheit von Sauerstoff in einer Pyrolysezone (30), indem das vorkonditionierte Materials auf eine Temperatur von 250 °C bis 700 °C, insbesondere 350 °C bis 500 °C, erwärmt wird, wobei die Verweilzeit des zu pyrolysierenden Materials in der Pyrolysezone (30) eine Minute bis eine Stunde, insbesondere eine Minute bis 30 Minuten, beispielsweise 5 Minuten bis 15 Minuten, beträgt und pyrolysiertes Material gebildet wird,
    wobei die Pyrolyse derart erfolgt, dass kontinuierlich oder teilkontinuierlich pyrolysiertes Material mittels Rückführungsmitteln (31) direkt in den der Vorkonditionierungszone (20) zugewandten Bereich (32) der Pyrolysezone (30) zurückgeführt wird, wobei zumindest in dem der Vorkonditionierungszone (20) zugewandten Bereich (32) der Pyrolysezone (30) eine Vermischung des pyrolysierten Materials mit dem vorkonditionierten Materials erfolgt und die Rückführungsmittel (31) in direktem Kontakt mit dem rückgeführten Material einerseits und dem zu pyrolysierenden Material andererseits stehen,
    D) Auftrennung des pyrolysierten Materials in einer Separationseinheit (50).

11. Verfahren nach dem vorhergehenden Anspruch,

**dadurch gekennzeichnet, dass**
Schritt B) so durchgeführt wird, dass
in einem ersten Betriebszustand ein Vorschub des vorkonditioniertem Materials in die Pyrolysezone (30) erfolgt und in der Pyrolysezone (30) vorliegendes Material in Richtung der Separationseinheit (50) fortbewegt wird und in einem zweiten Betriebszustand kein Vorschub des vorkonditioniertem Materials in die Pyrolysezone (30) erfolgt und eine Rückführung pyrolysierten Materials in den der Vorkonditionierungszone (20) zugewandten Bereich (32) der Pyrolysezone (30) erfolgt.

12. Verfahren nach einem der beiden vorhergehenden Ansprüche,
    **dadurch gekennzeichnet, dass**
    zwischen Schritt B) und Schritt D) folgender Schritt durchgeführt wird:

    C) Nachkonditionierung zumindest des Feststoffanteils des pyrolysierten Materials in einer Nachkonditionierungszone (40) bei einer Temperatur von 350 °C bis 800 °C.

13. Verfahren nach einem der drei vorhergehenden Ansprüche,
    **dadurch gekennzeichnet, dass**
    als Ausgangsmaterial zumindest eines der folgenden chemischen Elemente in elementarer, in ionischer oder in gebundener Form zumindest in Spuren enthält: Zink, Eisen, Platin, Rhenium, Chrom, Kupfer, Mangan, Nickel, Titan, Aluminium, Silizium.

14. Verfahren nach einem der vier vorhergehenden Ansprüche,
    **dadurch gekennzeichnet, dass**
    als Ausgangsmaterial ein Material mit einem Wasser-Gehalt größer 10 Gew.-% eingesetzt wird und/oder, dass Ausgangsmaterial mit einer mittleren Partikelgröße größer 1 mm, insbesondere von 5 bis 40 mm, eingesetzt wird.

15. Verfahren nach einem der fünf vorhergehenden Ansprüche,
    **dadurch gekennzeichnet, dass**
    in Schritt B) in der Pyrolysezone (30) eine Aufheizrate von 1 bis 10 °C/s, insbesondere 2 bis 10 °C/s eingestellt wird.

**Claims**

1. A system for thermocatalytic treatment of material, in particular of waste materials, comprising at least
   a charging region (10) for supplying starting material to be treated,
   a preconditioning zone (20) in which preconditioned material is formed from the starting material,
   a pyrolysis zone (30) in which pyrolysed material is formed from the preconditioned material,
   and a separation unit (50) for separation of the obtained pyrolysed material, wherein in the preconditioning zone (20), first heating means are provided for heating of the starting material to a temperature of at least 150 °C, and wherein in the pyrolysis zone (30), second heating means and recirculation means (31) are provided, said second heating means being provided for additional heating of the preconditioned material to a temperature of at least 350 °C, and wherein by means of the recirculation means (31), the solid portion of at least the pyrolysed material is recirculatable at least partly and directly into the region (32) of the pyrolysis zone (30) facing toward the preconditioning zone (20) so that the recirculation means (31) are in direct contact with the recirculated material on the one hand and with the material to be pyrolysed on the other hand.

2. The system according to the preceding claim,
   **characterized in that**
   the recirculation means (31) are provided at least in the region (32) of the pyrolysis zone (30) facing toward the preconditioning zone (20) such that a mixing of pyrolysed material and preconditioned material can occur.

3. The system according to one of the preceding claims,
   **characterized in that**
   the recirculation means (31) in the pyrolysis zone (30) are designed such that they can affect the dwell time of the material to be pyrolysed in the pyrolysis zone.

4. The system according to one of the preceding claims,
   **characterized in that**

the system can be operated in a first operating state and in a second operating state, wherein
in the first operating state, advance of the preconditioned material occurs, and any material present in the pyrolysis zone (30) is advanced in the direction of the separation unit (50), and
in the second operating state, solely a recirculation of pyrolysed material into the region (32) of the pyrolysis zone (30) facing toward the preconditioning zone (20) occurs.

5. The system according to one of the preceding claims,
**characterized in that**
the preconditioning zone (20) and pyrolysis zone (30) merge into one another and are arranged in a tubular reactor.

6. The system according to one of the preceding claims,
**characterized in that**
between the pyrolysis zone (30) and the separation unit (50) there is disposed a post-conditioning zone (40) for refinement of the pyrolysed material, wherein in the post-conditioning zone (40) there are third heating means to increase or to maintain the temperature of at least the solid portion of the pyrolysed material.

7. The system according to one of the preceding claims,
**characterized in that**
a conveyance means for transporting the starting material to the pyrolysis zone (30) is provided at least in the preconditioning zone (20) wherein the conveyance means is in particular a worm screw, in particular a worm screw (21) arranged on a shaft (61), or a belt conveyor.

8. The system according to one of the preceding claims,
**characterized in that**
the recirculation means (31) comprise back-mixing worm screw elements, contrarotating worm screw elements, recirculation bars and/or recirculation hooks and/or that
the recirculation means (31) are arranged on a shaft (61) and/or on a reactor interior wall of the pyrolysis zone (30).

9. The system according to one of the preceding claims,
**characterized in that**
the longitudinal axis of the pyrolysis zone in respect to a horizontal plane is inclined at an angle of 0° to 45°, in particular of 0° to 25°, for example, 0° to 10°.

10. A method for thermocatalytic treatment of material, in particular of waste materials, with the following steps

A) Preconditioning of the starting material to be treated in a preconditioning zone (20), in that the starting material is heated to a temperature of at least 150 °C, wherein preconditioned material is formed,
B) Pyrolysis of the preconditioned material in the absence of oxygen in a pyrolysis zone (30), in that the preconditioned material is heated to a temperature of 250 °C to 700 °C, in particular 350 °C to 500 °C, wherein the dwell time in the pyrolysis zone (30) of the material being pyrolysed is from one minute up to one hour, in particular one minute up to 30 minutes, for example, 5 minutes to 15 minutes, and pyrolysed material is formed, wherein the pyrolysis takes place such that pyrolysed material is recirculated continuously or semi-continuously directly into the region (32) of the pyrolysis zone (30) facing toward the preconditioning zone (20) by means of recirculation means (31), wherein at least in the region (32) of the pyrolysis zone (30) facing toward the preconditioning zone (20) a mixing of the pyrolysed material with the preconditioned material takes place and wherein the recirculation means (31) are in direct contact with the recirculated material on the one hand and with the material to be pyrolysed on the other hand,
D) Separation of the pyrolysed material in a separation unit (50).

11. The method according to the preceding claim,
**characterized in that**
Step B) is carried out such that
in a first operating state, advance of the preconditioned material into the pyrolysis zone (30) takes place, and material present in the pyrolysis zone (30) is advanced in the direction of the separation unit (50), and in a second operating state, no advance of the preconditioned material into the pyrolysis zone (30) takes place and recirculation of pyrolysed material into the region (32) of the pyrolysis zone (30) facing toward the preconditioning zone (20) takes place.

12. The method according to one of the two preceding claims,

**characterized in that**
the following step is carried out between step B) and step D):

> C) Post-conditioning of at least the solid portion of the pyrolysed material in a post-conditioning zone (40) at a temperature of 350 °C to 800 °C.

13. The method according to one of the three preceding claims,
**characterized in that**
the starting material contains at least one of the following chemical elements at least in trace amounts in elementary, ionic, or bonded form:

> zinc, iron, platinum, rhenium, chromium, copper, manganese, nickel, titanium, aluminum, silicon.

14. The method according to one of the four preceding claims,
**characterized in that**
material with a water content of greater than 10 wt% is used as starting material and/or that
starting material with an average particle size of greater than 1 mm, in particular from 5 to 40 mm, is used.

15. The method according to one of the five preceding claims,
**characterized in that**
in step B) in the pyrolysis zone (30), a heating rate of 1 to 10 °C/s, in particular 2 to 10 °C/s is used.


**Revendications**

1. Système de traitement thermocatalytique d'une matière, en particulier de déchets, comprenant au moins une zone de chargement (10) destinée à amener une matière première à traiter,
une zone de pré-conditionnement (20), dans laquelle une matière pré-conditionnée est formée à partir de la matière première,
une zone de pyrolyse (30) dans laquelle une matière pyrolysée est formée à partir de la matière pré-conditionnée, ainsi qu'une unité de séparation (50) destinée à séparer la matière pyrolysée obtenue,
des premiers moyens de chauffage étant prévus dans la zone de pré-conditionnement (20) pour le chauffage de la matière première à une température d'au moins 150 °C,
et des deuxièmes moyens de chauffage étant prévus dans la zone de pyrolyse (30) pour le chauffage supplémentaire de la matière pré-conditionnée à une température d'au moins 350 °C, et des moyens de recirculation (31) étant également prévus dans la zone de pyrolyse (30), la fraction de matière solide d'au moins la matière pyrolysée pouvant, avec les moyens de recirculation (31), être recirculée au moins partiellement directement dans la région (32) de la zone de pyrolyse (30) qui est tournée vers la zone de pré-conditionnement (20) de telle sorte que les moyens de recirculation (31) sont en contact direct avec la matière recirculée d'une part et avec la matière à pyrolyser d'autre part.

2. Système selon la revendication précédente,
**caractérisé en ce que**,
au moins dans la région (32) de la zone de pyrolyse (30) qui est tournée vers la zone de pré-conditionnement (20), les moyens de recirculation (31) sont constitués de telle sorte qu'un mélange intime de matière pyrolysée et de matière pré-conditionnée peut intervenir.

3. Système selon l'une des revendications précédentes,
**caractérisé en ce que**
les moyens de recirculation (31) dans la zone de pyrolyse (30) sont constitués de telle sorte qu'avec eux le temps de séjour de la matière à pyrolyser dans la zone de pyrolyse peut être influencé.

4. Système selon l'une des revendications précédentes,
**caractérisé en ce que**
le système peut être mis en fonctionnement dans un premier état de fonctionnement et dans un deuxième état de fonctionnement,
une avance de la matière pré-conditionnée s'effectuant dans le premier état de fonctionnement, et la matière présente dans la zone de pyrolyse (30) étant déplacée plus loin en direction de l'unité de séparation (50) et,

dans le deuxième état de fonctionnement, seul une recirculation de la matière pyrolysée est effectuée dans la région (32) de la zone de pyrolyse (30) qui est tournée vers la zone de pré-conditionnement (20).

5. Système selon l'une des revendications précédentes,
**caractérisé en ce que**
la zone de pré-conditionnement (20) et la zone de pyrolyse (30) se fondent l'une dans l'autre et sont disposées dans un réacteur tubulaire.

6. Système selon l'une des revendications précédentes,
**caractérisé en ce que**,
entre la zone de pyrolyse (30) et l'unité de séparation (50), il est disposé une zone de post-conditionnement (40) destinée au traitement d'amélioration de la matière pyrolysée, des troisièmes moyens de chauffage étant prévus dans la zone de post-conditionnement (40) pour augmenter ou maintenir constante la température d'au moins la fraction de matière solide de la matière pyrolysée.

7. Système selon l'une des revendications précédentes,
**caractérisé en ce que**,
au moins dans la zone de pré-conditionnement (20), il est prévu des moyens de transport pour le transport de la matière première vers la zone de pyrolyse (30), le moyen de transport étant en particulier un convoyeur à vis, en particulier un convoyeur à vis (21) disposé sur un arbre (61), ou un convoyeur à bande.

8. Système selon la revendication précédente,
**caractérisé en ce que**
les moyens de recirculation (31) comprennent des éléments à vis de rétromélange, des éléments à vis de sens contraire, des nervures de recirculation et/ou des crochets de recirculation, et/ou **en ce que** les moyens de recirculation (31) sont disposés sur un arbre (61) et/ou sur une paroi intérieure de réacteur de la zone de pyrolyse (30).

9. Système selon l'une des revendications précédentes,
**caractérisé en ce que**,
par rapport à un plan horizontal, l'axe longitudinal de la zone de pyrolyse (30) est incliné selon un angle de 0° à 45°, en particulier de 0° à 25°, par exemple de 0° à 10°.

10. Procédé de traitement thermocatalytique d'une matière, en particulier de déchets, avec les étapes suivantes

A) pré-conditionnement de la matière première à traiter dans une zone de pré-conditionnement (20), par le fait que la matière première est chauffée à une température d'au moins 150 °C, de la matière pré-conditionnée étant formée,
B) pyrolyse de la matière pré-conditionnée en l'absence d'oxygène dans une zone de pyrolyse (30) par le fait que la matière pré-conditionnée est chauffée à une température de 250 °C à 700 °C, en particulier de 350 °C à 500 °C, le temps de séjour de la matière à pyrolyser dans la zone de pyrolyse (30) étant compris entre une minute et une heure, en particulier entre une minute et 30 minutes, par exemple entre 5 minutes et 15 minutes, et de la matière pyrolysée étant formée,
la pyrolyse étant effectuée de telle sorte que de la matière pyrolysée est recirculée, de façon continue ou partiellement continue, au moyen de moyens de recirculation (31), directement dans la région (32) de la zone de pyrolyse (30) qui est tournée vers la zone de pré-conditionnement (20), un mélange de la matière pyrolysée avec la matière pré-conditionnée étant effectué au moins dans la région (32) de la zone de pyrolyse (30) qui est tournée vers la zone de pré-conditionnement (20), et les moyens de recirculation (31) étant en contact direct avec la matière recirculée d'une part et la matière à pyrolyser d'autre part,
(D) séparation de la matière pyrolysée dans une unité de séparation (50).

11. Procédé selon la revendication précédente, **caractérisé en ce que**
l'étape B) est réalisée de telle sorte que,
dans un premier état de fonctionnement, il est effectué une avance de la matière pré-conditionnée dans la zone de pyrolyse (30), et de la matière présente dans la zone de pyrolyse (30) est déplacée plus loin en direction de l'unité de séparation (50) et, dans un deuxième état de fonctionnement, aucune avance de la matière pré-conditionnée dans la zone de pyrolyse (30) n'est effectuée, et un recirculationde la matière pyrolysée est effectué dans la région (32) de la zone de pyrolyse (30) qui est tournée vers la zone de pré-conditionnement (20).

**12.** Procédé selon l'une des deux revendications précédentes,
**caractérisé en ce que**
l'étape suivante est réalisée entre l'étape B) et l'étape D) :

C) post-conditionnement d'au moins la fraction de matière solide de la matière pyrolysée dans une zone de post-conditionnement (40) à une température de 350 °C à 800 °C.

**13.** Procédé selon l'une des trois revendications précédentes,
**caractérisé en ce**
qu'au moins un des éléments chimiques suivants est contenu en tant que matière première sous forme élémentaire, ionique ou liée, au moins sous forme de traces :

zinc, fer, platine, rhénium, chrome, cuivre, manganèse, nickel, titane, aluminium, silicium.

**14.** Procédé selon l'une des quatre revendications précédentes,
**caractérisé en ce que**,
en tant que matière première, une matière avec une teneur en eau supérieure à 10 % en poids est utilisée, et/ou **en ce qu'**une matière première avec une grandeur de particules moyenne supérieure à 1 mm, en particulier de 5 à 40 mm, est utilisée.

**15.** Procédé selon l'une des cinq revendications précédentes,
**caractérisé en ce que**,
dans l'étape B), une vitesse de chauffage de 1 à 10 °C/s, en particulier de 2 à 10 °C/s, est réglée dans la zone de pyrolyse (30).

FIG. 1

EP 3 132 004 B1

FIG. 2A

31                    31

61

FIG. 2B

31

FIG. 3A

Kohle

31%

42%    Gas

20%

7%

wässrige
Phase

Öl

FIG. 3B

N₂

CO₂

25      19

2      CₓHᵧ ,

CO

15

7      32      H₂

CH₄

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2010130988 A1
- WO 2009138757 A2
- US 3518181 A